(19)

**Europäisches Patentamt**

**European Patent Office**

**Office européen des brevets**

(11)  **EP 4 708 383 A1**

(12)  **EUROPEAN PATENT APPLICATION**
published in accordance with Art. 153(4) EPC

(43) Date of publication:
**11.03.2026 Bulletin 2026/11**

(21) Application number: **24815914.7**

(22) Date of filing: **31.05.2024**

(51) International Patent Classification (IPC):
$H01M\ 4/139^{(2010.01)}$   $H01M\ 4/525^{(2010.01)}$
$H01M\ 4/505^{(2010.01)}$   $H01M\ 4/58^{(2010.01)}$
$H01M\ 4/1391^{(2010.01)}$   $H01M\ 4/1397^{(2010.01)}$
$H01M\ 4/02^{(2006.01)}$

(86) International application number:
**PCT/KR2024/007490**

(87) International publication number:
**WO 2024/248540 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.05.2023  KR 20230070276**

(71) Applicant: **LG Chem, Ltd.
Seoul 07336 (KR)**

(72) Inventors:
• **LEE, Kyung Lok
Daejeon 34122 (KR)**

• **YOU, Min Kyu
Daejeon 34122 (KR)**
• **LEE, June Woo
Daejeon 34122 (KR)**
• **HA, Seoung Chul
Daejeon 34122 (KR)**
• **SHIN, Ji A
Daejeon 34122 (KR)**
• **HEO, Un Seon
Daejeon 34122 (KR)**
• **DO, Joong Yeop
Daejeon 34122 (KR)**

(74) Representative: **Hoffmann Eitle
Patent- und Rechtsanwälte PartmbB
Arabellastraße 30
81925 München (DE)**

(54)  **METHOD FOR MANUFACTURING POSITIVE ELECTRODE SLURRY COMPOSITION AND
METHOD FOR MANUFACTURING POSITIVE ELECTRODE**

(57)    The present invention relates to a method of preparing a positive electrode slurry composition, which includes steps of (S1) mixing a positive electrode active material, a conductive agent, and a binder in a non-aqueous solvent to prepare a mixture having a solid content of greater than 60 wt%; (S2) cooling the mixture to -30°C to 15°C to prepare a positive electrode slurry composition precursor; and (S3) maintaining a temperature of the positive electrode slurry composition precursor to prepare a positive electrode slurry composition having a $V_{72}$ of 0% to 50%, wherein $V_n$ is a viscosity increase rate when the temperature of the positive electrode slurry composition precursor is maintained for n hours, and the viscosity increase rate is represented by Equation 1, and a method of preparing a positive electrode.

**EP 4 708 383 A1**

**Description**

**TECHNICAL FIELD**

Cross-reference to Related Applications

This application claims priority from Korean Patent Application No. 10-2023-0070276, filed on May 31, 2023, the disclosure of which is incorporated by reference herein.

Technical Field

The present invention relates to a method of preparing a positive electrode slurry composition and a method of preparing a positive electrode.

**BACKGROUND ART**

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and, among these oxides, a lithium cobalt composite metal oxide, such as $LiCoO_2$, having a high operating voltage and excellent capacity characteristics has been mainly used. However, the $LiCoO_2$ has poor thermal properties due to an unstable crystal structure caused by delithiation. Also, since the $LiCoO_2$ is expensive, there is a limitation in using a large amount of the $LiCoO_2$ as a power source for applications such as electric vehicles.

Lithium manganese composite metal oxides ($LiMnO_2$ or $LiMn_2O_4$), lithium iron phosphate compounds ($LiFePO_4$, etc.), or lithium nickel composite metal oxides ($LiNiO_2$, etc.) have been developed as materials for replacing the $LiCoO_2$. Among these materials, research and development of the lithium nickel composite metal oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the $LiNiO_2$, a lithium transition metal oxide, in which a portion of nickel (Ni) is substituted with cobalt (Co), manganese (Mn), or aluminum (Al), has been developed.

With respect to the lithium nickel composite metal oxide and lithium transition metal oxide containing a large amount of nickel, a relatively large amount of lithium oxide remains as an impurity during preparation processes thereof, the impurity may be converted into LiOH and $Li_2CO_3$, and these may cause a gelation phenomenon during a process of preparing a positive electrode slurry and a process of preparing a positive electrode using the prepared positive electrode slurry. In a case in which the positive electrode slurry is gelated, viscosity may be increased to cause problems in the process of preparing a positive electrode, and accordingly, a lot of cost and effort is required for process management.

Also, in a case in which a solid content of the positive electrode slurry is increased, there are effects such as an increase in productivity, electrode drying efficiency, and an improvement in binder migration, but if the solid content is increased, specifically, in a case in which the solid content is greater than 60%, viscosity is increased, and the viscosity of the prepared positive electrode slurry is increased rapidly over storage time. As described above, in a case in which the increase in the viscosity of the positive electrode slurry is intensified, problems in quality of a positive electrode, which is prepared by using the positive electrode slurry, may occur, and it may be difficult to use the positive electrode slurry itself in the preparation of the positive electrode.

Thus, there is a need to develop a method which may suppress an increase in viscosity over time after preparing a positive electrode slurry with a high solid content.

[Prior Art Documents]

[Patent Document]

Japanese Patent Application Laid-open Publication No. 2007-141649

**DISCLOSURE OF THE INVENTION**

**TECHNICAL PROBLEM**

An aspect of the present invention provides a method of preparing a positive electrode slurry composition which may suppress an increase in viscosity of the positive electrode slurry composition having a solid content of greater than 60%.

Another aspect of the present invention provides a method of preparing a positive electrode in which the positive electrode is prepared by using the positive electrode slurry composition with a controlled increase in viscosity.

**TECHNICAL SOLUTION**

In order to solve the above-described tasks, the present invention provides a method of preparing a positive electrode slurry composition and a method of preparing a positive electrode.

(1) The present invention provides a method of preparing a positive electrode slurry composition which includes steps of: (S1) mixing a positive electrode active material, a conductive agent, and a binder in a non-aqueous solvent to prepare a mixture having a solid content of greater than 60 wt%; (S2) cooling the mixture to -30°C to 15°C to prepare a positive electrode slurry composition precursor; and (S3) maintaining a temperature of the positive electrode slurry composition precursor to prepare a positive electrode slurry composition having a $V_{72}$ of 0% to 50%, wherein $V_n$ is a viscosity increase rate when the temperature of the positive electrode slurry composition precursor is maintained for n hours, and the viscosity increase rate is represented by Equation 1.

$$\text{Viscosity increase rate } (V_n[\%]) = (VS2[cP] - VS1[cP] \times 100/VS1[cP]) \qquad \text{[Equation 1]}$$

In Equation 1, VS1 is viscosity [cP] of the mixture, and VS2 is viscosity [cP] of the positive electrode slurry composition.

(2) The present invention provides the method of (1) above, wherein the positive electrode active material includes at least one selected from lithium composite transition metal compounds having compositions represented by Formulae 1 to 4.

$$\text{[Formula 1]} \qquad Li_a[Ni_bCo_cMn_dM^1{}_{1-(b+c+d)}]O_2$$

In Formula 1,

$M^1$ is at least one selected from the group consisting of sodium (Na), potassium (K), magnesium (Mg), aluminum (Al), iron (Fe), chromium (Cr), yttrium (Y), tin (Sn), titanium (Ti), boron (B), phosphorus (P), zirconium (Zr), ruthenium (Ru), niobium (Nb), tungsten (W), barium (Ba), strontium (Sr), lanthanum (La), gallium (Ga), gadolinium (Gd), samarium (Sm), calcium (Ca), cerium (Ce), fluorine (F), tantalum (Ta), molybdenum (Mo), scandium (Sc), vanadium (V), zinc (Zn), copper (Cu), indium (In), sulfur (S), and bismuth (Bi), and
$0.9 \leq a \leq 1.1$, $0 < b < 1$, $0 < c < 1$, $0 < d < 1$, and $0 < b+c+d \leq 1$,

$$\text{[Formula 2]} \qquad Li_eNi_{1-f}M^2{}_fO_2$$

In Formula 2,

$M^2$ is at least one selected from the group consisting of manganese (Mn), Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi, and
$0.9 \leq e \leq 1.1$ and $0 \leq f < 1$,

$$\text{[Formula 3]} \qquad Li_gNi_hMn_iM^3{}_jO_2$$

In Formula 3,

$M^3$ is at least one selected from the group consisting of cobalt (Co), Na, K, Mg, Al, Fe, Cr, Y, Sn, Ti, P, Zr, Ru, Nb, W, Ba, Sr, La, Ga, Gd, Sm, Ca, Ce, F, Ta, Mo, Sc, V, Zn, Cu, In, S, B, and Bi, and
$1.0 \leq g \leq 1.5$, $0 \leq h \leq 0.5$, $0.4 \leq i \leq 0.9$, and $0 \leq j \leq 0.1$, and

[Formula 4] $LiFe_{1-k}M^4_kPO_4$

In Formula 4,

$M^4$ is at least one selected from the group consisting of Mn, Co, Na, K, Mg, Al, Fe, Cr, Y, Sn, Ti, B, P, Zr, Ru, Nb, W, Ba, Sr, La, Ga, tellurium (Te), iridium (Ir), Gd, Sm, antimony (Sb), Ca, Ce, F, Ta, Mo, Sc, V, Zn, Cu, In, S, and Bi, and

$$0 \leq k < 1.$$

(3) The present invention provides the method of (1) or (2) above, wherein the positive electrode active material includes at least two selected from lithium composite transition metal compounds having compositions represented by Formulae 1 to 4.

[Formula 1] $Li_a[Ni_bCo_cMn_dM^1_{1-(b+c+d)}]O_2$

In Formula 1,

$M^1$ is at least one selected from the group consisting of Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi, and
$0.9 \leq a \leq 1.1$, $0 < b < 1$, $0 < c < 1$, $0 < d < 1$, and $0 < b+c+d \leq 1$,

[Formula 2] $Li_eNi_{1-f}M^2_fO_2$

In Formula 2,

$M^2$ is at least one selected from the group consisting of Mn, Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi, and
$0.9 \leq e \leq 1.1$ and $0 \leq f < 1$,

[Formula 3] $Li_gNi_hMn_iM^3_jO_2$

In Formula 3,

$M^3$ is at least one selected from the group consisting of Co, Na, K, Mg, Al, Fe, Cr, Y, Sn, Ti, P, Zr, Ru, Nb, W, Ba, Sr, La, Ga, Gd, Sm, Ca, Ce, F, Ta, Mo, Sc, V, Zn, Cu, In, S, B, and Bi, and
$1.0 \leq g \leq 1.5$, $0 \leq h \leq 0.5$, $0.4 \leq i \leq 0.9$, and $0 \leq j \leq 0.1$, and

[Formula 4] $LiFe_{1-k}M^4_kPO_4$

In Formula 4,
$M^4$ is at least one selected from the group consisting of Mn, Co, Na, K, Mg, Al, Fe, Cr, Y, Sn, Ti, B, P, Zr, Ru, Nb, W, Ba, Sr, La, Ga, Te, Ir, Gd, Sm, Sb, Ca, Ce, F, Ta, Mo, Sc, V, Zn, Cu, In, S, and Bi, and

$$0 \leq k < 1.$$

(4) The present invention provides the method of any one of (1) to (3) above, wherein the positive electrode active material includes a lithium composite transition metal compound having a composition represented by Formula 5.

[Formula 5] $Li_a[Ni_{b'}Co_{c'}Mn_{d'}M^5_{1-(b'+c'+d')}]O_2$

$M^5$ is at least one selected from the group consisting of Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi, and
$0.9 \leq a' \leq 1.1$, $0.6 \leq b' < 1$, $0 < c' < 0.4$, $0 < d' < 0.4$, and $0 < b'+c'+d' \leq 1$.

(5) The present invention provides the method of any one of (1) to (4) above, wherein the mixing is performed such that an amount of the positive electrode active material is in a range of 85 parts by weight to 99 parts by weight, an amount of the conductive agent is in a range of 0.5 part by weight to 10 parts by weight, and an amount of the binder is in a range of 0.5 part by weight to 10 parts by weight, based on 100 parts by weight of the solid content.

(6) The present invention provides the method of any one of (1) to (5) above, wherein the solid content is in a range of 70 wt% to 85 wt%.

(7) The present invention provides the method of any one of (1) to (6) above, wherein $V_{24}$ is in a range of -5% to 30%.

(8) The present invention provides the method of any one of (1) to (7) above, wherein $V_{168}$ is in a range of 0% to 80%.

(9) The present invention provides the method of any one of (1) to (8) above, wherein $V_{336}$ is in a range of 1% to 120%.

(10) The present invention provides the method of any one of (1) to (9) above, wherein the mixture, the positive electrode slurry composition precursor, and the positive electrode slurry composition each independently have a viscosity of 20,000 cP or less.

(11) The present invention provides the method of any one of (1) to (10) above, wherein the mixing is performed at a temperature of 0°C to 15°C, and the $V_{72}$ is in a range of 8% to 35%.

(12) The present invention provides the method of any one of (1) to (11) above, wherein the cooling is performed at a temperature of -30°C to less than 0°C, and the $V_{72}$ is in a range of 0% to 20%.

(13) The present invention provides a method of preparing a positive electrode which includes steps of: preparing a positive electrode slurry composition according to the method of any one of (1) to (12) above; and (B) forming a positive electrode active material layer by applying the positive electrode slurry composition onto a current collector and drying the applied positive electrode slurry composition.

(14) The present invention provides the method of (13) above, wherein the method further includes a step (A1) of transferring the positive electrode slurry composition to a means of applying the positive electrode active material composition, immediately before step (B), wherein the transferring is performed at a temperature of -30°C to 15°C.

## ADVANTAGEOUS EFFECTS

Since a method of preparing a positive electrode slurry composition according to the present invention includes steps of mixing a positive electrode active material, a conductive agent, and a binder in a non-aqueous solvent to prepare a mixture having a solid content of greater than 60 wt%; and cooling the mixture to -30°C to 15°C to prepare a positive electrode slurry composition precursor, there is an effect of improving viscosity of a positive electrode slurry composition with a high solid content, and accordingly, there is an effect of improving a problem in a positive electrode preparation process.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In this specification, it will be further understood that the terms "include," "comprise," or "have" specify the presence of stated features, numbers, steps, elements, or combinations thereof, but do not preclude the presence or addition of one or more other features, numbers, steps, elements, or combinations thereof.

In this specification, an amount of each element in a lithium composite transition metal compound may be measured by ICP (Inductive Coupled Plasma) analysis using an inductively coupled plasma-optical emission spectrometer (ICP-OES; PerkinElmer, Optima 8000DV).

## Method of Preparing Positive Electrode Slurry Composition

Hereinafter, a method of preparing a positive electrode slurry composition according to the present invention will be described.

In the method of preparing a positive electrode slurry composition of the present invention, after preparing a positive electrode slurry composition, a step of suppressing occurrence of gelation of the positive electrode slurry composition by storing the positive electrode slurry composition in a certain temperature range is performed.

Specifically, the method of preparing a positive electrode slurry composition according to the present invention includes steps of: (S1) mixing a positive electrode active material, a conductive agent, and a binder in a non-aqueous solvent to prepare a mixture having a solid content of greater than 60 wt%; (S2) cooling the mixture to -30°C to 15°C to prepare a positive electrode slurry composition precursor; and (S3) maintaining a temperature of the positive electrode slurry composition precursor to prepare a positive electrode slurry composition having a $V_{72}$ of 0% to 50%, wherein $V_n$ is a viscosity increase rate when the temperature of the positive electrode slurry composition precursor is maintained for n hours, and the viscosity increase rate is represented by Equation 1 below.

$$\text{Viscosity increase rate } (V_n[\%]) = (VS2[cP] - VS1[cP] \times 100/VS1[cP]) \quad \text{[Equation 1]}$$

In Equation 1, VS1 is viscosity [cP] of the mixture, and VS2 is viscosity [cP] of the positive electrode slurry composition.

In a case in which a solid content of the positive electrode slurry composition is 60 wt% or less, there is a problem in that energy density of a positive electrode prepared is low.

Since the positive electrode slurry composition, which is prepared by mixing the positive electrode active material, the conductive agent, and the binder in the non-aqueous solvent, may be gelated by an -OH group of a component contained in the positive electrode slurry composition and moisture that may be contained in the -OH group, viscosity of a positive electrode slurry may be increased. In a case in which the solid content of the positive electrode slurry is greater than about 60 wt%, the viscosity of the positive electrode slurry is increased, and the viscosity of the positive electrode slurry increases rapidly over time after preparation. In a case in which the viscosity of the positive electrode slurry is increased to be greater than certain viscosity as described above, there is a problem in forming a uniform positive electrode layer when applying the positive electrode slurry onto a base. It is preferable to use the positive electrode slurry immediately after preparation in order to form the uniform positive electrode layer, but, in a commercial positive electrode preparation process, since the positive electrode slurry may need to be stored for a certain period of time after preparation, it is necessary to suppress an increase in viscosity while storing the positive electrode slurry.

As a result of significant amount of research conducted, the present inventors have found that, when preparing a positive electrode slurry composition, an increase in viscosity of the positive electrode slurry composition over time may be suppressed in a case in which a step of cooling to -30°C to 15°C to prepare a positive electrode slurry composition precursor; and a step of maintaining a temperature of the positive electrode slurry composition precursor are included. Also, the present inventors have found that, since the increase in viscosity of the positive electrode slurry composition over time may be suppressed even when the solid content of the positive electrode slurry composition is high, an effect of further increasing the solid content in the positive electrode slurry composition may be exhibited, thereby leading to the completion of the present invention.

The above-described positive electrode slurry composition according to the present invention may be prepared by appropriately adjusting a type of the positive electrode active material, a type of the conductive agent, a type of the binder, a type of the non-aqueous solvent, and a mixing ratio of the solutions.

Hereinafter, each step of the present invention will be described in detail.

**Step (S1)**

Step (S1) of mixing a positive electrode active material, a conductive agent, and a binder in a non-aqueous solvent to prepare a mixture having a solid content of greater than 60 wt% is included. Specifically, the solid content may be greater than 60 wt%, 65 wt% or more, or 70 wt% or more, and may be 75 wt% or less, 80 wt% or less, 85 wt% or less, 90 wt% or less, 95 wt% or less, or less than 100 wt%. In a case in which the solid content is 60 wt% or less, it is not a major problem that viscosity of a positive electrode slurry composition increases over time when the positive electrode slurry composition is prepared, but there is a problem in that energy density of a positive electrode prepared is low. The energy density of the prepared positive electrode may be improved by adjusting the solid content to be greater than 60 wt%, and, particularly, in a case in which the solid content is in a range of 70 wt% to 85 wt%, the energy density is excellent, and a positive electrode active material with improved coatability may be prepared by controlling the viscosity increase rate.

According to an embodiment of the present invention, the positive electrode active material may include at least one selected from lithium composite transition metal compounds having compositions represented by Formulae 1 to 4 below.

[Formula 1]     $Li_a[Ni_bCo_cMn_dM^1{}_{1-(b+c+d)}]O_2$

In Formula 1,

$M^1$ is at least one selected from the group consisting of sodium (Na), potassium (K), magnesium (Mg), aluminum (Al), iron (Fe), chromium (Cr), yttrium (Y), tin (Sn), titanium (Ti), boron (B), phosphorus (P), zirconium (Zr), ruthenium (Ru), niobium (Nb), tungsten (W), barium (Ba), strontium (Sr), lanthanum (La), gallium (Ga), gadolinium (Gd), samarium (Sm), calcium (Ca), cerium (Ce), fluorine (F), tantalum (Ta), molybdenum (Mo), scandium (Sc), vanadium (V), zinc (Zn), copper (Cu), indium (In), sulfur (S), and bismuth (Bi), and

$0.9 \leq a \leq 1.1$, $0 < b < 1$, $0 < c < 1$, $0 < d < 1$, and $0 < b+c+d \leq 1$,

[Formula 2] $\qquad Li_eNi_{1-f}M^2_fO_2$

In Formula 2,

$M^2$ is at least one selected from the group consisting of manganese (Mn), Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi, and

$0.9 \leq e \leq 1.1$ and $0 \leq f < 1$,

[Formula 3] $\qquad Li_gNi_hMn_iM^3_jO_2$

In Formula 3,

$M^3$ is at least one selected from the group consisting of cobalt (Co), Na, K, Mg, Al, Fe, Cr, Y, Sn, Ti, P, Zr, Ru, Nb, W, Ba, Sr, La, Ga, Gd, Sm, Ca, Ce, F, Ta, Mo, Sc, V, Zn, Cu, In, S, B, and Bi, and

$1.0 \leq g \leq 1.5$, $0 \leq h \leq 0.5$, $0.4 \leq i \leq 0.9$, and $0 \leq j \leq 0.1$, and

[Formula 4] $\qquad LiFe_{1-k}M^4_kPO_4$

In Formula 4,

$M^4$ is at least one selected from the group consisting of Mn, Co, Na, K, Mg, Al, Fe, Cr, Y, Sn, Ti, B, P, Zr, Ru, Nb, W, Ba, Sr, La, Ga, tellurium (Te), iridium (Ir), Gd, Sm, antimony (Sb), Ca, Ce, F, Ta, Mo, Sc, V, Zn, Cu, In, S, and Bi, and

$$0 \leq k < 1.$$

In Formula 1,
$M^1$ is a doping element, wherein, specifically, $M^1$ is at least one selected from the group consisting of Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi. $M^1$ is not necessarily included, but may improve capacity characteristics and life characteristics.

a may be 0.9 or more, or 1.0 or more, and may be 1.1 or less. When a satisfies the above range, high safety and high energy density per unit volume may be achieved.

b is a molar ratio of nickel (Ni) among total metals excluding lithium in the lithium composite transition metal compound, wherein b may be greater than 0, 0.1 or more, 0.2 or more, 0.3 or more, 0.4 or more, 0.5 or more, 0.6 or more, 0.7 or more, 0.8 or more, or 0.9 or more, and may be 0.97 or less, 0.98 or less, 0.99 or less, or less than 1. When b satisfies the above range, high energy characteristics may be achieved.

c is a molar ratio of cobalt (Co) among the total metals excluding lithium in the lithium composite transition metal compound, wherein c may be greater than 0, 0.01 or more, or 0.02 or more, and may be 0.03 or less, 0.04 or less, 0.05 or less, 0.06 or less, 0.07 or less, 0.08 or less, 0.09 or less, 0.1 or less, 0.11 or less, 0.12 or less, 0.13 or less, 0.14 or less, 0.15 or less, 0.16 or less, 0.17 or less, 0.18 or less, 0.19 or less, 0.2 or less, 0.21 or less, 0.22 or less, 0.23 or less, 0.24 or less, 0.25 or less, 0.26 or less, 0.27 or less, 0.28 or less, 0.29 or less, 0.3 or less, 0.31 or less, 0.32 or less, 0.33 or less, 0.34 or less, 0.35 or less, 0.36 or less, 0.37 or less, 0.38 or less, 0.39 or less, 0.4 or less, 0.41 or less, 0.42 or less, 0.43 or less, 0.44 or less, 0.45 or less, 0.46 or less, 0.47 or less, 0.48 or less, 0.49 or less, 0.5 or less, 0.6 or less, 0.7 or less, 0.8 or less, 0.9 or less, or less than 1. When c satisfies the above range, stability may be improved during charge and discharge processes, and rate capability may be improved.

d is a molar ratio of manganese (Mn) among the total metals excluding lithium in the lithium composite transition metal compound, wherein d may be greater than 0, 0.01 or more, or 0.02 or more, and may be 0.03 or less, 0.04 or less, 0.05 or less, 0.06 or less, 0.07 or less, 0.08 or less, 0.09 or less, 0.1 or less, 0.11 or less, 0.12 or less, 0.13 or less, 0.14 or less, 0.15 or less, 0.16 or less, 0.17 or less, 0.18 or less, 0.19 or less, 0.2 or less, 0.21 or less, 0.22 or less, 0.23 or less, 0.24 or less, 0.25 or less, 0.26 or less, 0.27 or less, 0.28 or less, 0.29 or less, 0.3 or less, 0.31 or less, 0.32 or less, 0.33 or less, 0.34 or less, 0.35 or less, 0.36 or less, 0.37 or less, 0.38 or less, 0.39 or less, 0.4 or less, 0.41 or less, 0.42 or less, 0.43 or less, 0.44 or less, 0.45 or less, 0.46 or less, 0.47 or less, 0.48 or less, 0.49 or less, 0.5 or less, 0.6 or less, 0.7 or less, 0.8 or less, 0.9 or less, or less than 1. When d satisfies the above range, high-temperature stability may be increased and a side reaction with an electrolyte solution may be relatively reduced.

$1-b+c+d$ is a molar ratio of $M^1$ among the total metals excluding lithium in the lithium composite transition metal compound, wherein $b+c+d$ may be greater than 0, 0.1 or more, 0.2 or more, 0.3 or more, 0.4 or more, 0.5 or more, 0.6 or more, 0.7 or more, 0.8 or more, or 0.9 or more, and may be 0.97 or less, 0.98 or less, 0.99 or less, or 1 or less. When $b+c+d$ satisfies the above range, stability of a crystal structure of the positive electrode active material may be improved and a particle shape may be improved.

In Formula 2,

$M^2$ is a doping element, wherein, specifically, $M^2$ is at least one selected from the group consisting of Mn, Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi. $M^2$ is not necessarily included, but may improve the capacity characteristics and the life characteristics.

$e$ may be 0.9 or more, or 1.0 or more, and may be 1.1 or less. When $e$ satisfies the above range, high safety and high energy density per unit volume may be achieved.

$1-f$ is a molar ratio of nickel (Ni) among total metals excluding lithium in the lithium composite transition metal compound. $f$ is a molar ratio of $M^2$ among the total metals excluding lithium in the lithium composite transition metal compound, wherein $f$ may be 0 or more, or 0.01 or more, and may be 0.1 or less, 0.2 or less, 0.3 or less, 0.4 or less, 0.5 or less, 0.6 or less, 0.7 or less, 0.8 or less, 0.9 or less, or less than 1. When $f$ satisfies the above range, the stability of the crystal structure of the positive electrode active material may be improved and the particle shape may be improved.

In Formula 3,

$M^3$ is a doping element, wherein, specifically, $M^3$ is at least one selected from the group consisting of Mn, Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi. $M^3$ is not necessarily included, but may improve the capacity characteristics and life characteristics.

$g$ may be 1.0 or more, 1.1 or more, or 1.2 or more, and may be 1.3 or less, 1.4 or less, or 1.5 or less. When $g$ satisfies the above range, high safety and high energy density per unit volume may be achieved.

$h$ is a molar ratio of nickel (Ni) among total metals excluding lithium in the lithium composite transition metal compound, wherein $h$ may be 0 or more, 0.1 or more, or 0.2 or more, and may be 0.3 or less, 0.4 or less, or 0.5 or less. When $h$ satisfies the above range, high energy characteristics may be achieved.

$i$ is a molar ratio of manganese (Mn) among the total metals excluding lithium in the lithium composite transition metal compound, wherein $i$ may be 0.4 or more, 0.5 or more, or 0.6 or more, and may be 0.7 or less, 0.8 or less, or 0.9 or less. When $i$ satisfies the above range, the high-temperature stability may be increased and the side reaction with the electrolyte solution may be relatively reduced.

$j$ is a molar ratio of $M^3$ among the total metals excluding lithium in the lithium composite transition metal compound, wherein $j$ may be 0 or more, or 0.01 or more, and may be 0.1 or less, 0.2 or less, 0.3 or less, 0.4 or less, 0.5 or less, 0.6 or less, 0.7 or less, 0.8 or less, 0.9 or less, or less than 1. When $j$ satisfies the above range, the stability of the crystal structure of the positive electrode active material may be improved and the particle shape may be improved.

$g$, $h$, $i$, and $j$ may satisfy $g+h+i+j=2$.

In Formula 4,

$M^4$ is a doping element, wherein, specifically, $M^4$ is at least one selected from the group consisting of Mn, Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi. $M^4$ is not necessarily included, but may improve the capacity characteristics and life characteristics.

$1-k$ is a molar ratio of Fe among total metals excluding lithium in a lithium iron phosphate compound. $k$ is a molar ratio of $M^4$ among the total metals excluding lithium in the lithium iron phosphate compound, wherein $k$ may be 0 or more, 0.1 or more, 0.2 or more, 0.3 or more, 0.4 or more, or 0.5 or more, and may be 0.6 or less, 0.7 or less, 0.8 or less, 0.9 or less, or less than 1. When $k$ is within the above range, the particle shape of the positive electrode active material may be improved, the stability of the crystal structure may be improved, and the capacity characteristics may be improved by improving electrical conductivity.

According to an embodiment of the present invention, the lithium composite transition metal compound having the composition represented by Formula 3 may be a lithium composite transition metal compound having a composition represented by Formula 3-1 below.

[Formula 3-1] $\quad m(Li_nNi_oMn_pM^3{}_qO_2)\cdot(1-m)(Li_2MnO_3)$

In Formula 3-1,

$M^3$ is at least one selected from the group consisting of Co, Na, K, Mg, Al, Fe, Cr, Y, Sn, Ti, B, P, Zr, Ru, Nb, W, Ba, Sr, La, Ga, Mg, Gd, Sm, Ca, Ce, F, Ta, Mo, Sc, V, Zn, Cu, In, S, B, and Bi, and
$0 < m < 1$, $0.9 \leq n \leq 1.1$, $0 \leq o < 1$, $0 < p \leq 1$, and $0 \leq q \leq 0.1$.

The compound represented by Formula 3-1 may be a compound which simultaneously includes a phase having a crystal structure of space group R3-m (rhombohedra) and a phase having a crystal structure of space group C2/m (monoclinic).

$M^3$ is a doping element, wherein, specifically, $M^3$ is at least one selected from the group consisting of Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi. $M^3$ is not necessarily included, but may improve the capacity characteristics and life characteristics.

m means a molar ratio of the phase having the crystal structure of the space group R3-m (rhombohedra) in the lithium composite transition metal compound, wherein m may be greater than 0, 0.1 or more, 0.2 or more, 0.3 or more, 0.4 or more, 0.5 or more, 0.6 or more, or 0.7 or more, and may be 0.8 or less, 0.9 or less, or less than 1. When m satisfies the above range, high capacity characteristics and high energy density per unit volume may be achieved. 1-m may mean a molar ratio of the phase having the crystal structure of the space group C2/m (monoclinic).

n is a molar ratio of lithium (Li) in the phase having the crystal structure of the space group R3-m (rhombohedra), wherein n may be 0.9 or more, 0.95 or more, or 1.0 or more, and may be 1.03 or less, 1.05 or less, 1.07 or less, or 1.1 or less.

o is a molar ratio of nickel (Ni) in the phase having the crystal structure of the space group R3-m (rhombohedra), wherein o may be 0 or more, 0.1 or more, 0.2 or more, 0.3 or more, 0.4 or more, or 0.5 or more, and may be 0.6 or less, 0.7 or less, 0.8 or less, 0.9 or less, or less than 1. When o satisfies the above range, high energy density may be exhibited to achieve high capacity characteristics.

p is a molar ratio of manganese (Mn) in the phase having the crystal structure of the space group R3-m (rhombohedra), wherein p may be greater than 0, 0.1 or more, 0.2 or more, 0.3 or more, 0.4 or more, or 0.5 or more, and may be 0.6 or less, 0.7 or less, 0.8 or less, 0.9 or less, or 1 or less. When p satisfies the above range, high energy density may be exhibited to achieve high capacity characteristics.

q is a molar ratio of $M^3$ in the phase having the crystal structure of the space group R3-m (rhombohedra), wherein q may be 0 or more, 0.01 or more, 0.02 or more, 0.03 or more, 0.04 or more, or 0.05 or more, and may be 0.06 or less, 0.07 or less, 0.08 or less, 0.09 or less, or 0.1 or less. When q satisfies the above range, the stability of the crystal structure of the positive electrode active material may be improved and the particle shape may be improved.

According to an embodiment of the present invention, the positive electrode active material may include at least two selected from the lithium composite transition metal compounds having the compositions represented by Formulae 1 to 4. In this case, the capacity characteristics, life characteristics, or rate capability may be improved in comparison to a case where only one lithium composite transition metal compound is included.

According to an embodiment of the present invention, the positive electrode active material may include a lithium composite transition metal compound having a composition represented by Formula 5 below.

$$[\text{Formula 5}] \qquad Li_a[Ni_{b'}Co_{c'}Mn_{d'}M^5{}_{1-(b'+c'+d')}]O_2$$

$M^5$ is at least one selected from the group consisting of Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi, and
$0.9 \leq a' \leq 1.1$, $0.6 \leq b' < 1$, $0 < c' < 0.4$, $0 < d' < 0.4$, and $0 < b'+c'+d' \leq 1$.

In Formula 5,
$M^5$ is a doping element, wherein, specifically, $M^5$ is at least one selected from the group consisting of Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi. $M^5$ is not necessarily included, but may improve the capacity characteristics and life characteristics.

a' may be 0.9 or more, or 1.0 or more, and may be 1.1 or less. When a' satisfies the above range, high safety and high energy density per unit volume may be achieved.

b' is a molar ratio of nickel (Ni) among total metals excluding lithium in the lithium composite transition metal compound, wherein b' may be 0.6 or more, 0.7 or more, 0.8 or more, or 0.9 or more, and may be 0.97 or less, 0.98 or less, 0.99 or less, or less than 1. When b' satisfies the above range, high energy characteristics may be achieved.

c' is a molar ratio of cobalt (Co) among the total metals excluding lithium in the lithium composite transition metal compound, wherein c' may be greater than 0, 0.01 or more, or 0.02 or more, and may be 0.03 or less, 0.04 or less, 0.05 or less, 0.06 or less, 0.07 or less, 0.08 or less, 0.09 or less, 0.1 or less, 0.11 or less, 0.12 or less, 0.13 or less, 0.14 or less, 0.15 or less, 0.16 or less, 0.17 or less, 0.18 or less, 0.19 or less, 0.2 or less, 0.21 or less, 0.22 or less, 0.23 or less, 0.24 or less, 0.25 or less, 0.26 or less, 0.27 or less, 0.28 or less, 0.29 or less, 0.3 or less, 0.31 or less, 0.32 or less, 0.33 or less, 0.34 or less, 0.35 or less, 0.36 or less, 0.37 or less, 0.38 or less, 0.39 or less, or less than 0.4. When c' satisfies the above range, the stability may be improved during charge and discharge processes, and the rate capability may be improved.

d' is a molar ratio of manganese (Mn) among the total metals excluding lithium in the lithium composite transition metal compound, wherein d' may be greater than 0, 0.01 or more, or 0.02 or more, and may be 0.03 or less, 0.04 or less, 0.05 or less, 0.06 or less, 0.07 or less, 0.08 or less, 0.09 or less, 0.1 or less, 0.11 or less, 0.12 or less, 0.13 or less, 0.14 or less, 0.15 or less, 0.16 or less, 0.17 or less, 0.18 or less, 0.19 or less, 0.2 or less, 0.21 or less, 0.22 or less, 0.23 or less, 0.24 or less, 0.25 or less, 0.26 or less, 0.27 or less, 0.28 or less, 0.29 or less, 0.3 or less, 0.31 or less, 0.32 or less, 0.33 or less, 0.34 or less, 0.35 or less, 0.36 or less, 0.37 or less, 0.38 or less, 0.39 or less, or less than 0.4. When d' satisfies the above range, the high-temperature stability may be increased and the side reaction with the electrolyte solution may be relatively reduced.

$1-b'+c'+d'$ is a molar ratio of $M^5$ among the total metals excluding lithium in the lithium composite transition metal compound, wherein $b'+c'+d'$ may be greater than 0, 0.1 or more, 0.2 or more, 0.3 or more, 0.4 or more, 0.5 or more, 0.6 or more, 0.7 or more, 0.8 or more, or 0.9 or more, and may be 0.97 or less, 0.98 or less, 0.99 or less, or 1 or less. When $b'+c'+d'$ satisfies the above range, the stability of the crystal structure of the positive electrode active material may be improved and the particle shape may be improved.

With respect to a lithium composite transition metal oxide (hereinafter, referred to as nickel-rich lithium composite transition metal oxide), in which an amount of nickel among total metals excluding lithium is 60 mol% or more, among the positive electrode active materials, a relatively large amount of lithium by-products remains on a surface of the lithium composite transition metal oxide during a preparation process thereof. Since the impurities are converted into LiOH and $Li_2CO_3$, an increase in viscosity and a gelation phenomenon may occur more significantly in a positive electrode slurry composition using the nickel-rich lithium composite transition metal oxide as a positive electrode active material. Thus, with respect to the positive electrode slurry composition using the nickel-rich lithium composite transition metal oxide, in a case in which it is stored at ambient temperature without any action, the viscosity increases rapidly over time, and there is a problem in that the viscosity increases more rapidly as the temperature increases. Therefore, the present invention may be more effectively applied to the preparation of the positive electrode slurry composition including the nickel-rich lithium composite transition metal oxide which has a high risk of causing the gelation and increasing the viscosity of the positive electrode slurry.

The positive electrode active material may optionally further include a coating layer including at least one element (hereinafter, referred to as 'coating element') selected from the group consisting of Al, Ti, W, B, F, P, Mg, Ni, Co, Fe, Cr, V, Cu, Ca, Zn, Zr, Nb, Mo, Sr, Sb, Bi, silicon (Si), Y, and S on a surface of the positive electrode active material, if necessary. In a case in which the coating layer as described above is included, since a contact between the positive electrode active material and the electrolyte solution is blocked, gas generation due to the side reaction with the electrolyte solution and dissolution of the transition metal may be effectively suppressed.

The coating layer may be formed through a method of mixing the positive electrode active material and a raw material including the coating element and then heat-treating the mixture at a temperature of 200°C to 800°C.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used.

The non-aqueous solvent may be a non-aqueous solvent normally used in the art, and may be at least one selected from the group consisting of dimethyl sulfoxide (DMSO), DMF (dimethyl formamide), isopropyl alcohol, dimethylacetamide, N-methylpyrrolidone (NMP), and acetone.

An amount of the solvent used may be sufficient if the solvent may dissolve or disperse the positive electrode active material, the conductive agent, and the binder in consideration of a coating thickness of the slurry and manufacturing yield, and may allow to have viscosity that may provide excellent thickness uniformity during the subsequent coating for the preparation of the positive electrode.

The mixture may optionally include an additive, if necessary.

According to an embodiment of the present invention, the mixing may be performed such that an amount of the positive electrode active material is in a range of 85 parts by weight to 99 parts by weight, an amount of the conductive agent is in a range of 0.5 part by weight to 10 parts by weight, and an amount of the binder is in a range of 0.5 part by weight to 10 parts by weight, based on 100 parts by weight of the solid content. Specifically, the mixing may be performed such that the amount of the positive electrode active material may be 85 parts by weight or more, 86 parts by weight or more, 87 parts by weight or more, 88 parts by weight or more, 89 parts by weight or more, or 90 parts by weight or more, and may be 91 parts by weight or less, 92 parts by weight or less, 93 parts by weight or less, 94 parts by weight or less, 95 parts by weight or less, 96 parts by weight or less, 97 parts by weight or less, 98 parts by weight or less, or 99 parts by weight or less, the amount of the conductive agent may be 0.5 part by weight or more, 0.6 part by weight or more, 0.7 part by weight or more, 0.8 part by weight or more, 0.9 part by weight or more, 1 part by weight or more, 2 parts by weight or more, or 3 parts by weight or more, and may be 4 parts by weight or less, 5 parts by weight or less, 6 parts by weight or less, 7 parts by weight or less, 8 parts by weight or less, 9 parts by weight or less, or 10 parts by weight or less, and the amount of the binder may be 0.5 part by weight or more, 0.6 part by weight or more, 0.7 part by weight or more, 0.8 part by weight or more, 0.9 part by weight or more, 1 part by weight or more, 2 parts by weight or more, or 3 parts by weight or more, and may be 4 parts by weight or less, 5 parts by weight or less, 6 parts by weight or less, 7 parts by weight or less, 8 parts by weight or less, 9 parts by weight or less, or 10 parts by weight or less, based on 100 parts by weight of the solid content. In this case, a positive electrode slurry composition with a high solid content may be effectively prepared.

The preparing of the mixture may typically be performed according to a method of mixing the positive electrode active material, the conductive agent, and the binder in the non-aqueous solvent. In this case, the mixing may be performed at a temperature of -30°C to 75°C, and may specifically be performed at a temperature of -30°C or higher, -20°C or higher, or -10°C or higher, and 55°C or less, 60°C or less, 65°C or less, 70°C or less, or 75°C or less. In a case in which the mixing is performed within the above temperature range, an effect of minimizing gelation of the mixture during the mixing may be expected. Particularly, in a case in which the mixing is performed at a temperature of 0°C to 15°C, it may be more effective for the mixture prepared by the mixing to maintain low viscosity. The temperature during the mixing and a temperature of the mixture may be the same.

### Step (S2)

After step (S1), step (S2) of cooling the mixture to -30°C to 15°C to prepare a positive electrode slurry composition precursor is included.

Specifically, the mixture is cooled to -30°C or higher, and -23°C or less, -20°C or less, -10°C or less, 0°C or less, 10°C or less, or 15°C or less to prepare a positive electrode slurry composition precursor. In a case in which the mixture is cooled within the above temperature range, the gelation or increase in viscosity of the positive electrode slurry composition may be suppressed. Accordingly, the positive electrode slurry composition may maintain appropriate viscosity for forming a positive electrode layer even if time passes after preparing the positive electrode slurry composition. Particularly, in a case in which the cooling is performed at a temperature of -30°C to less than 0°C, since the viscosity may be kept low even if the solid content is high, a uniform positive electrode layer may be formed. In a case in which the mixture is cooled to less than -30°C, since energy required for cooling is excessively high, manufacturing efficiency may be low, and, in a case in which the mixture is cooled to more than 15°C or no cooling is performed, since the gelation or increase in viscosity of the positive electrode slurry composition is not suppressed, the viscosity may increase exponentially over time.

### Step (S3)

After step (S2), step (S3) of maintaining a temperature of the positive electrode slurry composition precursor to prepare a positive electrode slurry composition having a $V_{72}$ of 0% to 50% is included.

In the present invention, the viscosity increase rate ($V_n$[%]) was evaluated and expressed as a parameter represented by Equation 1 below. The viscosity increase rate as meant in the present invention is a value adjusted according to the viscosity of the positive electrode slurry composition (VS2[cP]) and viscosity of the mixture (VS1[cP]), wherein the closer the viscosity of the positive electrode slurry composition is to the viscosity of the mixture, the lower the viscosity increase rate is.

$$\text{Viscosity increase rate } (V_n[\%]) = (VS2[cP] - VS1[cP] \times 100/VS1[cP]) \qquad \text{[Equation 1]}$$

In Equation 1, VS1 is the viscosity [cP] of the mixture, and VS2 is the viscosity [cP] of the positive electrode slurry composition.

For example, if the viscosity of the positive electrode slurry composition and the viscosity of the mixture are the same, the viscosity increase rate is 0, and this means that, after the positive electrode active material, the conductive agent, and the binder are mixed in the non-aqueous solvent to prepare a mixture and viscosity of the mixture is measured, when viscosity of the positive electrode slurry composition prepared therefrom is measured, the viscosity is not increased.

According to the present invention, the temperature of the positive electrode slurry composition precursor is maintained to prepare a positive electrode slurry composition specifically having a $V_{72}$ of 0% or more, 1% or more, 2% or more, 3% or more, 4% or more, 5% or more, 6% or more, 7% or more, or 8% or more, and 20% or less, 25% or less, 30% or less, 35% or less, 40% or less, 45% or less, or 50% or less. In a case in which the $V_{72}$ is within the above range, since the increase in viscosity of the positive electrode slurry composition over time is suppressed, the positive electrode slurry composition may exhibit viscosity suitable for use in forming a positive electrode layer even if it is not used immediately after the preparation of the positive electrode slurry composition, and thus, an effect may be exhibited in which the prepared positive electrode slurry composition may be stored for a certain period of time. Therefore, since there is no need to use the positive electrode slurry composition to prepare a positive electrode immediately after the preparation of the positive electrode slurry composition, flexibility may be provided in design of a positive electrode preparation process. In contrast, in a case in which the $V_{72}$ is greater than 50%, since the viscosity of the positive electrode slurry composition increases over time, it may be difficult to prepare a positive electrode using the positive electrode slurry composition which has been stored for a certain period of time or more.

According to an embodiment of the present invention, the mixing of step (S1) is performed at a temperature of 0°C to 15°C, and the $V_{72}$ may be in a range of 8% to 35%, and the cooling of step (S2) is performed at a temperature of -30°C to less than 0°C, and the $V_{72}$ may be in a range of 0% to 20%.

According to an embodiment of the present invention, $V_{24}$ may be in a range of -5% to 30%. Specifically, the $V_{24}$ may be -5% or more, -4% or more, -3% or more, -2% or more, or -1% or more, and may be 20% or less, 25% or less, or 30% or less. In a case in which the $V_{24}$ is within the above range, since the increase in viscosity of the positive electrode slurry composition over time is suppressed, the positive electrode slurry composition may exhibit viscosity suitable for use in forming a positive electrode layer even if it is not used immediately after the preparation of the positive electrode slurry composition, and thus, an effect may be exhibited in which the prepared positive electrode slurry composition may be stored for a certain period of time.

According to an embodiment of the present invention, $V_{168}$ may be in a range of 0% to 80%. Specifically, the $V_{168}$ may be 0% or more, 1% or more, 2% or more, or 3% or more, and may be 55% or less, 60% or less, 65% or less, 70% or less, 75% or less, or 80% or less. In a case in which the $V_{168}$ is within the above range, since the increase in viscosity of the positive electrode slurry composition over time is suppressed, the positive electrode slurry composition may exhibit viscosity suitable for use in forming a positive electrode layer even if it is not used immediately after the preparation of the positive electrode slurry composition, and thus, an effect may be exhibited in which the prepared positive electrode slurry composition may be stored for a certain period of time.

According to an embodiment of the present invention, $V_{336}$ may be in a range of 1% to 120%. Specifically, the $V_{336}$ may be 1% or more, 2% or more, or 3% or more, and may be 75% or less, 80% or less, 85% or less, 90% or less, 95% or less, 100% or less, 105% or less, 110% or less, 115% or less, or 120% or less. In a case in which the $V_{336}$ is within the above range, since the increase in viscosity of the positive electrode slurry composition over time is suppressed, the positive electrode slurry composition may exhibit viscosity suitable for use in forming a positive electrode layer even if it is not used immediately after the preparation of the positive electrode slurry composition, and thus, an effect may be exhibited in which the prepared positive electrode slurry composition may be stored for a certain period of time.

According to an embodiment of the present invention, the mixture, the positive electrode slurry composition precursor, and the positive electrode slurry composition may each independently have a viscosity of 20,000 cP or less. Specifically, the mixture, the positive electrode slurry composition precursor, and the positive electrode slurry composition may each independently have a viscosity of 0 cP or more, or 3,000 cP or more, and 9,000 cP or less, 10,000 cP or less, 11,000 cP or less, 12,000 cP or less, 13,000 cP or less, 14,000 cP or less, 15,000 cP or less, 16,000 cP or less, 17,000 cP or less, 18,000 cP or less, 19,000 cP or less, or 20,000 cP or less. In a case in which the viscosity is within the above range, the viscosity may be maintained low during the preparation of the positive electrode slurry composition and the positive electrode slurry composition may have viscosity suitable for use in forming a positive electrode layer.

## Method of Preparing Positive Electrode

Also, the present invention provides a method of preparing a positive electrode.

The method of preparing a positive electrode of the present invention may include a step of preparing a positive electrode using the positive electrode slurry composition which is prepared by the above-described method of preparing a positive electrode slurry composition.

Specifically, the method of preparing a positive electrode of the present invention may include steps of: (A) preparing a positive electrode slurry composition according to the method of preparing a positive electrode slurry composition; and (B) forming a positive electrode layer by applying the positive electrode slurry composition onto a current collector and drying the applied positive electrode slurry composition.

Thus, the method of preparing a positive electrode according to the present invention may include the method of preparing a positive electrode slurry composition, and accordingly, the same process as steps (S1) and (S2) described in the above-described method of preparing a positive electrode slurry composition may be performed.

Hereinafter, each step of the present invention will be described in detail.

**Step (A)**

Step (A) of preparing a positive electrode slurry composition according to the method of preparing a positive electrode slurry composition is included.

The preparing of the positive electrode slurry composition includes a process of preparing a positive electrode slurry composition according to the above-described method of preparing a positive electrode slurry composition, and specifically includes steps of: (S1) mixing a positive electrode active material, a conductive agent, and a binder in a non-aqueous solvent to prepare a mixture having a solid content of greater than 60 wt%; (S2) cooling the mixture to - 30°C to 15°C to prepare a positive electrode slurry composition precursor; and (S3) maintaining a temperature of the positive electrode slurry composition precursor to prepare a positive electrode slurry composition having a $V_{72}$ of 0% to 50%, wherein $V_n$ is a viscosity increase rate when the temperature of the positive electrode slurry composition precursor is maintained for n hours, and the viscosity increase rate may be represented by Equation 1 described in the present specification.

**Step (B)**

Thereafter, step (B) of forming a positive electrode layer by applying the positive electrode slurry composition onto a current collector and drying the applied positive electrode slurry composition may be included.

In step (B), the prepared positive electrode slurry composition is applied onto the current collector and dried to form a positive electrode layer.

Step (B) may be performed according to a conventional method of preparing a positive electrode except that the positive electrode slurry composition of step (A) is used.

For example, the positive electrode slurry composition, which is prepared according to the method of preparing a positive electrode slurry composition according to the embodiment of the present invention, may be applied onto one surface or both surfaces of a positive electrode collector and then dried and rolled to form a positive electrode layer on the positive electrode collector, and the positive electrode layer may be formed to have a porosity of 10 vol% to 30 vol%, specifically 15 vol% to 30 vol%, and more specifically 18 vol% to 27 vol%.

The method of preparing a positive electrode according to an embodiment of the present invention further includes a step (A1) of transferring the positive electrode slurry composition to a means of applying the positive electrode active material composition, immediately before step (B), for the application of the positive electrode slurry composition in step (B), wherein the transferring may be performed at a temperature of -30°C to 15°C. In a case in which the transferring is performed in the above temperature range, since the increase in viscosity of the positive electrode slurry composition may be suppressed as much as possible, a more uniform positive electrode layer may be formed.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

Also, as another method, the positive electrode, for example, may be prepared by casting the positive electrode slurry composition on a separate support and then laminating a film separated from the support on the positive electrode collector.

Furthermore, an electrochemical device including the positive electrode may be prepared by using the positive electrode which is prepared by the above method of preparing a positive electrode. The electrochemical device may specifically be a battery or a capacitor, and may more specifically be a lithium secondary battery.

The method of preparing a positive electrode of the present invention may be a method of preparing a positive electrode for a lithium secondary battery, and the positive electrode prepared through the above preparation method may be used as a positive electrode for a lithium secondary battery.

The lithium secondary battery specifically includes a positive electrode, a negative electrode disposed to face the positive electrode, a separator disposed between the positive electrode and the negative electrode, and an electrolyte, wherein the positive electrode may be the positive electrode prepared by the above-described method of preparing a positive electrode.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 parts by weight to 99 parts by weight based on 100 parts by weight of a total weight of the negative electrode active material layer.

The binder is a component that assists in the binding between the conductive agent, the active material, and the current collector, wherein the binder may typically be added in an amount of 0.1 part by weight to 10 parts by weight based on 100 parts by weight of the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 parts by weight or less, preferably, 5 parts by weight or less based on 100 parts by weight of the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 part by weight to 5 parts by weight based on 100 parts by weight of a total weight of the electrolyte.

As described above, since the lithium secondary battery including the positive electrode material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

## MODE FOR CARRYING OUT THE INVENTION

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

## Preparation Examples

**Preparation Example 1**

NiSO$_4$, CoSO$_4$, and MnSO$_4$ were dissolved in water such that a molar ratio of nickel:cobalt:manganese was 96:2:2 to prepare a transition metal-containing solution with a concentration of 2 M.

A container containing the transition metal-containing solution, an additional 25 wt% NaOH solution, and a 15 wt% NH$_4$OH aqueous solution were respectively connected to a 200 L batch-type reactor set at 55°C.

Subsequently, after deionized water was put into the batch-type reactor, dissolved oxygen in the water was removed by purging with nitrogen gas to create a non-oxidizing atmosphere in the reactor. Thereafter, after NaOH was added, a pH in the co-precipitation reactor was maintained at 11.7 while the mixture was stirred at a stirring speed of 250 rpm.

Thereafter, the transition metal-containing solution was added to the co-precipitation reactor at a rate of 250 mL/hr, an NH$_4$OH aqueous solution was added at a rate of 40 mL/hr, an aqueous NaOH solution was added at a rate at which a pH of a reaction solution may be maintained at 11.7, and, after 6 hours of reaction, stirring was stopped and a supernatant was removed to concentrate the reaction solution. This process was repeated 4 to 5 times to grow particles until an average particle diameter (D$_{50}$) reached about 14 μm.

The transition metal oxide precursor particles thus prepared were filtered with a filter press, and then dried at 130°C for 24 hours to obtain a positive electrode active material precursor having a composition represented by Ni$_{0.96}$Co$_{0.02}$Mn$_{0.02}$(OH)$_2$. Subsequently, the positive electrode active material precursor and LiOH·H$_2$O were mixed such that a molar ratio of (Ni+Co+Mn):Li was 1:1.06, and sintered at 775°C for 13.5 hours in an oxygen atmosphere to prepare a positive electrode active material (lithium transition metal oxide) in a form of a secondary particle which had a composition represented by LiNi$_{0.96}$Co$_{0.02}$Mn$_{0.02}$O$_2$ and an average particle diameter (D$_{50}$) of 14 μm.

**Preparation Example 2**

After a positive electrode active material precursor [composition: Ni$_{0.96}$Co$_{0.02}$Mn$_{0.02}$(OH)$_2$, average particle diameter (D$_{50}$) of 4.5 μm] and LiOH were mixed such that a molar ratio of (Ni+Co+Mn):Li was 1:1.05, and primarily sintered at 850°C for 9 hours in an oxygen atmosphere to prepare a pre-sintered product,
the pre-sintered product was disintegrated, and then secondarily sintered at 750°C for 9 hours in an oxygen atmosphere to prepare a positive electrode active material (lithium transition metal oxide) in a form of a single particle which had a composition represented by LiNi$_{0.96}$Co$_{0.02}$Mn$_{0.02}$O$_2$ and an average particle diameter (D$_{50}$) of 14 μm.

**Example 1**

The positive electrode active material prepared in Preparation Example 1, carbon black (Denka Company Limited, Denka Black), PVdF (Kureha Corporation, KF9709), and a non-aqueous solvent (DAEJUNG CHEMICALS & METALS CO., LTD., N-methylpyrrolidone (NMP)) were left standing for 6 hours in a chamber at 20°C such that each temperature was 20°C.

200 g of the positive electrode active material, 3.43 g of the carbon black as a conductive agent, and 4.36 g of the PVdF, as a binder, were dispersed and mixed in 80.8 g of the non-aqueous solvent (NMP) using a homo disper mixer (PRIMIX Corporation, Homo Disper 2.5) at room temperature to prepare a mixture having a solid content of 72.0 wt%. Temperature of the mixture was increased during the mixing due to resistance of the mixer and the mixture, and mixing temperature was maintained at 45°C.

After the mixture was cooled to 0°C to prepare a positive electrode slurry composition precursor, the positive electrode slurry composition precursor was stored while maintaining its temperature to prepare a positive electrode slurry composition.

**Example 2**

A positive electrode slurry composition was prepared in the same manner as in Example 1 except that, after the mixture was cooled to 10°C to prepare a positive electrode slurry composition precursor, the positive electrode slurry composition precursor was stored while maintaining its temperature.

**Example 3**

A positive electrode slurry composition was prepared in the same manner as in Example 1 except that after the mixture was cooled to -5°C to prepare a positive electrode slurry composition precursor, the positive electrode slurry composition precursor was stored while maintaining its temperature.

**Example 4**

A positive electrode slurry composition was prepared in the same manner as in Example 1 except that, after the mixture was cooled to -10°C to prepare a positive electrode slurry composition precursor, the positive electrode slurry composition precursor was stored while maintaining its temperature.

**Example 5**

A positive electrode slurry composition was prepared in the same manner as in Example 1 except that, after the mixture was cooled to -20°C to prepare a positive electrode slurry composition precursor, the positive electrode slurry composition precursor was stored while maintaining its temperature.

**Example 6**

A positive electrode slurry composition was prepared in the same manner as in Example 1 except that, after the mixture was cooled to -30°C to prepare a positive electrode slurry composition precursor, the positive electrode slurry composition precursor was stored while maintaining its temperature.

**Example 7**

The positive electrode active material prepared in Preparation Example 1, carbon black (Denka Company Limited, Denka Black), PVdF (Kureha Corporation, KF9709), and a solvent (DAEJUNG CHEMICALS & METALS CO., LTD., N-methylpyrrolidone (NMP)) were left standing for 6 hours in a chamber at 10°C such that each temperature was 10°C.

While controlling temperatures of inner surface and inner space of a mixing chamber where mixing was performed to be 10°C, 200 g of the positive electrode active material, 3.43 g of the carbon black as a conductive agent, and 4.36 g of the PVdF, as a binder, were dispersed and mixed in 80.8 g of the non-aqueous solvent (NMP) using a homo disper mixer (PRIMIX Corporation, Homo Disper 2.5) to prepare a mixture having a solid content of 72.0 wt%. Heat generated by resistance of the mixer and the mixture during the mixing was removed to maintain mixing temperature at 10°C.

After the mixture was cooled to -10°C to prepare a positive electrode slurry composition precursor, the positive electrode slurry composition precursor was stored while maintaining its temperature to prepare a positive electrode slurry composition.

**Example 8**

The positive electrode active material prepared in Preparation Example 1, carbon black (Denka Company Limited, Denka Black), PVdF (Kureha Corporation, KF9709), and a solvent (DAEJUNG CHEMICALS & METALS CO., LTD., N-methylpyrrolidone (NMP)) were left standing for 6 hours in a chamber at -10°C such that each temperature was -10°C.

While controlling temperatures of inner surface and inner space of a mixing chamber where mixing was performed to be -10°C, 200 g of the positive electrode active material, 3.43 g of the carbon black as a conductive agent, and 4.36 g of the PVdF, as a binder, were dispersed and mixed in 80.8 g of the non-aqueous solvent (NMP) using a homo disper mixer (PRIMIX Corporation, Homo Disper 2.5) to prepare a mixture having a solid content of 72.0 wt%. Heat generated by resistance of the mixer and the mixture during the mixing was removed to maintain mixing temperature at -10°C.

After the mixture was cooled to -10°C to prepare a positive electrode slurry composition precursor, the positive electrode slurry composition precursor was stored while maintaining its temperature to prepare a positive electrode slurry composition.

**Example 9**

A positive electrode slurry composition was prepared in the same manner as in Example 1 except that a mixture was prepared by mixing the positive electrode active material prepared in Preparation Example 2 and, after the mixture was cooled to -10°C to prepare a positive electrode slurry composition precursor, the positive electrode slurry composition precursor was stored while maintaining its temperature to prepare the positive electrode slurry composition.

**Example 10**

The positive electrode active material prepared in Preparation Example 1, carbon black (Denka Company Limited, Denka Black), PVdF (Kureha Corporation, KF9709), and a non-aqueous solvent (DAEJUNG CHEMICALS & METALS CO., LTD., N-methylpyrrolidone (NMP)) were left standing for 6 hours in a chamber at 30°C such that each temperature was 30°C.

200 g of the positive electrode active material, 3.43 g of the carbon black as a conductive agent, and 4.36 g of the PVdF, as a binder, were dispersed and mixed in 80.8 g of the non-aqueous solvent (NMP) using a homo disper mixer (PRIMIX Corporation, Homo Disper 2.5) at room temperature to prepare a mixture having a solid content of 72.0 wt%. Temperature of the mixture was increased during the mixing due to resistance of the mixer and the mixture, and mixing temperature was maintained at 55°C.

After the mixture was cooled to -10°C to prepare a positive electrode slurry composition precursor, the positive electrode slurry composition precursor was stored while maintaining its temperature to prepare a positive electrode slurry composition.

**Example 11**

A positive electrode slurry composition was prepared in the same manner as in Example 1 except that a mixture was prepared by mixing $LiNiO_2$ as a positive electrode active material and, after the mixture was cooled to -5°C to prepare a positive electrode slurry composition precursor, the positive electrode slurry composition precursor was stored while maintaining its temperature to prepare the positive electrode slurry composition.

**Example 12**

A positive electrode slurry composition was prepared in the same manner as in Example 1 except that a mixture was prepared by mixing $LiNi_{1/3}Co_{1/3}Mn_{1/3}O_2$ as a positive electrode active material and, after the mixture was cooled to -5°C to prepare a positive electrode slurry composition precursor, the positive electrode slurry composition precursor was stored while maintaining its temperature to prepare the positive electrode slurry composition.

**Example 13**

A positive electrode slurry composition was prepared in the same manner as in Example 1 except that a mixture was prepared by mixing a particulate secondary structure including $LiFePO_4$ with an olivine crystal structure as a positive electrode active material and, after the mixture was cooled to -5°C to prepare a positive electrode slurry composition precursor, the positive electrode slurry composition precursor was stored while maintaining its temperature to prepare the positive electrode slurry composition.

**Example 14**

A positive electrode slurry composition was prepared in the same manner as in Example 1 except that a mixture was prepared by mixing $Li_{1.2}Ni_{0.35}Mn_{0.65}O_2$ as a positive electrode active material and, after the mixture was cooled to -5°C to prepare a positive electrode slurry composition precursor, the positive electrode slurry composition precursor was stored while maintaining its temperature to prepare the positive electrode slurry composition.

**Example 15**

A positive electrode slurry composition was prepared in the same manner as in Example 1 except that a mixture was prepared by mixing a positive electrode material, in which the positive electrode active material prepared in Preparation Example 1 and a particulate secondary structure including $LiFePO_4$ with an olivine crystal structure were mixed in a weight ratio of 50:50, as a positive electrode active material and, after the mixture was cooled to -5°C to prepare a positive electrode slurry composition precursor, the positive electrode slurry composition precursor was stored while maintaining its temperature to prepare the positive electrode slurry composition.

**Example 16**

A positive electrode slurry composition was prepared in the same manner as in Example 1 except that a mixture was prepared by mixing a positive electrode material, in which the positive electrode active material prepared in Preparation Example 1 and $Li_{1.2}Ni_{0.35}Mn_{0.65}O_2$ were mixed in a weight ratio of 50:50, as a positive electrode active material and, after the mixture was cooled to -5°C to prepare a positive electrode slurry composition precursor, the positive electrode slurry composition precursor was stored while maintaining its temperature to prepare the positive electrode slurry composition.

**Example 17**

The positive electrode active material prepared in Preparation Example 1, carbon black (Denka Company Limited, Denka Black), PVdF (Kureha Corporation, KF9709), and a non-aqueous solvent (DAEJUNG CHEMICALS & METALS CO., LTD., N-methylpyrrolidone (NMP)) were left standing for 6 hours in a chamber at 20°C such that each temperature was 20°C.
200 g of the positive electrode active material, 3.43 g of the carbon black as a conductive agent, and 4.36 g of the PVdF, as a binder, were dispersed and mixed in 80.8 g of the non-aqueous solvent (NMP) using a homo disper mixer (PRIMIX Corporation, Homo Disper 2.5) at room temperature to prepare a mixture having a solid content of 72.0 wt%. Temperature of the mixture was increased during the mixing due to resistance of the mixer and the mixture, and mixing temperature was maintained at 45°C.
After the mixture was cooled to -23°C to prepare a positive electrode slurry composition precursor, the positive electrode slurry composition precursor was stored while maintaining its temperature to prepare a positive electrode slurry composition.

**Comparative Example 1**

A positive electrode slurry composition was prepared in the same manner as in Example 1 except that, after the mixture was cooled to 20°C to prepare a positive electrode slurry composition precursor, the positive electrode slurry composition precursor was stored while maintaining its temperature to prepare the positive electrode slurry composition.

**Comparative Example 2**

A positive electrode slurry composition was prepared in the same manner as in Example 1 except that, after the mixture was cooled to 40°C to prepare a positive electrode slurry composition precursor, the positive electrode slurry composition precursor was stored while maintaining its temperature to prepare the positive electrode slurry composition.

**Comparative Example 3**

A positive electrode slurry composition was prepared in the same manner as in Example 1 except that the mixture was transferred to a constant temperature and humidity chamber without a cooling step and stored while maintaining its temperature at 50°C to prepare the positive electrode slurry composition.

**Comparative Example 4**

The positive electrode active material prepared in Preparation Example 2, carbon black (Denka Company Limited, Denka Black), PVdF (Kureha Corporation, KF9709), and a solvent (DAEJUNG CHEMICALS & METALS CO., LTD., N-methylpyrrolidone (NMP)) were left standing for 6 hours in a chamber at -10°C such that each temperature was -10°C.
While controlling temperatures of inner surface and inner space of a mixing chamber where mixing was performed to be -10°C, 200 g of the positive electrode active material, 3.43 g of the carbon black as a conductive agent, and 4.36 g of the PVdF, as a binder, were dispersed and mixed in 80.8 g of the non-aqueous solvent (NMP) using a homo disper mixer (PRIMIX Corporation, Homo Disper 2.5) to prepare a mixture having a solid content of 72.0 wt%. Heat generated by resistance of the mixer and the mixture during the mixing was removed to maintain mixing temperature at -10°C.
A positive electrode slurry composition was prepared in the same manner as in Example 8 except that the mixture was transferred to a constant temperature and humidity chamber without a cooling step and stored while maintaining its temperature at 50°C to prepare the positive electrode slurry composition.

**Experimental Example: Viscosity Evaluation**

Viscosity (cP) was measured for each of the mixtures and the positive electrode slurry compositions, which were prepared in the examples and the comparative examples, using a viscometer (manufactured by TOKI Sangyo, Co., Ltd., viscometer TV-22), and a viscosity increase rate ($V_n$[%]) was calculated and presented in Table 1 below.

Specifically, viscosity was measured for each of the mixtures and the positive electrode slurry compositions, which were prepared in the examples and the comparative examples, at 25°C and 1 rpm using the viscometer, and the viscosity of the mixture (VS1[cP]), the viscosity of the positive electrode slurry composition (VS2[cP]), and a percentage ($V_n$(%)) of a difference ((VS2[cP] - VS1[cP]) between the viscosity of the positive electrode slurry composition and the viscosity of the mixture relative to the viscosity of the mixture (VS1[cP]) were calculated and presented in Table 1 below. The viscosity of the positive electrode slurry composition was obtained by measuring viscosities when the temperature of the positive electrode slurry composition precursor was maintained for 24 hours, 72 hours, 168 hours, and 336 hours, respectively.

For reference, when measuring viscosity at 25°C, only viscosity changes within a margin of error occurred. In addition, if the viscosity was 15,000 cP or more, it was not possible to prepare an electrode.

[Table 1]

| | Positive electrode active material type | Temperature (°C) | | VS1 (cP) | Maintained 24 hrs | | Maintained 72 hrs | | Maintained 168 hrs | | Maintained 336 hrs | |
| | | Mixing | Cooling | | VS2 (cP) | $V_{24}$ (%) | VS2 (cP) | $V_{72}$ (%) | VS2 (cP) | $V_{168}$ (%) | VS2 (cP) | $V_{336}$ (%) |
|---|---|---|---|---|---|---|---|---|---|---|---|---|
| Example 1 | NMC 14 μm (Ni 96%) | 45 | 0 | 3,800 | 3,850 | 1.3 | 4,250 | 11.8 | 5,150 | 35.5 | 5,600 | 47.4 |
| Example 2 | NMC 14 μm (Ni 96%) | 45 | 10 | 3,600 | 4,100 | 13.9 | 4,500 | 25.0 | 5,450 | 51.4 | 6,135 | 70.4 |
| Example 3 | NMC 14 μm (Ni 96%) | 45 | -5 | 3,700 | 3,750 | 1.4 | 4,250 | 14.9 | 4,200 | 13.5 | 4,350 | 17.6 |
| Example 4 | NMC 14 μm (Ni 96%) | 45 | -10 | 3,500 | 3,450 | -1.4 | 4,100 | 17.1 | 4,300 | 22.9 | 4,150 | 18.6 |
| Example 5 | NMC 14 μm (Ni 96%) | 45 | -20 | 3,400 | 3,450 | 1.5 | 3,650 | 7.4 | 4,100 | 20.6 | 4,000 | 17.6 |
| Example 6 | NMC 14 μm (Ni 96%) | 45 | -30 | 3,700 | 3,800 | 2.7 | 3,950 | 6.8 | 4,100 | 10.8 | 4,050 | 9.5 |
| Example 7 | NMC 14 μm (Ni 96%) | 10 | -10 | 4,000 | 4,100 | 2.5 | 4,500 | 12.5 | 4,550 | 13.8 | 4,500 | 12.5 |
| Example 8 | NMC 14 μm (Ni 96%) | -10 | -10 | 3,900 | 3,850 | -1.3 | 4,200 | 7.7 | 4,500 | 15.4 | 4,500 | 15.4 |
| Example 9 | Single particle NMC 3.5 μm (Ni 96%) | 45 | -10 | 4,500 | 4,700 | 4.4 | 4,850 | 7.8 | 5,250 | 16.7 | 5,100 | 13.3 |
| Example 10 | NMC 14 μm (Ni 96%) | 55 | -10 | 8,050 | 8,150 | 1.2 | 8,150 | 1.2 | 8,350 | 3.7 | 8,950 | 11.2 |
| Example 11 | LiNiO$_2$ | 45 | -5 | 4,100 | 4,250 | 3.7 | 4,400 | 7.3 | 4,350 | 6.1 | 4,350 | 6.1 |
| Example 12 | NMC 14 μm (Ni 33.3%) | 45 | -5 | 3,800 | 3,900 | 2.6 | 3,950 | 3.9 | 4,150 | 9.2 | 3,950 | 3.9 |
| Example 13 | LFP | 45 | -5 | 4,200 | 4,450 | 6.0 | 4,700 | 11.9 | 4,950 | 17.9 | 5,150 | 22.6 |
| Example 14 | NMX 6.4 μm (Mn 65%) | 45 | -5 | 3,700 | 3,850 | 4.1 | 4,150 | 12.2 | 4,200 | 13.5 | 4,450 | 20.3 |
| Example 15 | NMC 14 μm (Ni 96%) + LFP | 45 | -5 | 4,300 | 4,500 | 4.7 | 4,750 | 10.5 | 4,900 | 14.0 | 5,100 | 18.6 |
| Example 16 | NMC 14 μm (Ni 96%) + NMX 6.4 μm (Mn 65%) | 45 | -5 | 3,850 | 4,150 | 7.8 | 4,350 | 13.0 | 4,500 | 16.9 | 4,550 | 18.2 |
| Example 17 | NMC 14 μm (Ni 96%) | 45 | -23 | 3,250 | 3,350 | 3.1 | 3,500 | 7.7 | 3,650 | 12.3 | 3,800 | 16.9 |
| Comparative Example 1 | NMC 14 μm (Ni 96%) | 45 | 20 | 4,300 | 5,750 | 33.7 | 9,500 | 120.9 | 12,000 | 179.1 | 30,000 | 597.8 |
| Comparative Example 2 | NMC 14 μm (Ni 96%) | 45 | 40 | 4,500 | 15,550 | 245.6 | 30,000 | 566.7 | - | - | - | - |
| Comparative Example 3 | NMC 14 μm (Ni 96%) | 45 | 50 | 3,700 | 30,000 | 710.8 | - | - | - | - | - | - |

| | Positive electrode active material type | Temperature (°C) | | VS1 (cP) | Maintained 24 hrs | | Maintained 72 hrs | | Maintained 168 hrs | | Maintained 336 hrs | |
|---|---|---|---|---|---|---|---|---|---|---|---|---|
| | | Mixing | Cooling | | VS2 (cP) | $V_{24}$ (%) | VS2 (cP) | $V_{72}$ (%) | VS2 (cP) | $V_{168}$ (%) | VS2 (cP) | $V_{336}$ (%) |
| Comparative Example 4 | NMC 14 $\mu$m (Ni 96%) | -10 | 50 | 3,700 | 30,000 | 710.8 | - | - | - | - | - | - |

Referring to Table 1, with respect to the positive electrode slurry compositions prepared in Example 1 to Example 17, that is, the positive electrode slurry compositions which were prepared by performing the steps of (S1) mixing a positive electrode active material, a conductive agent, and a binder in a non-aqueous solvent to prepare a mixture having a solid content of greater than 60 wt%; (S2) cooling the mixture to -30°C to 15°C to prepare a positive electrode slurry composition precursor; and (S3) maintaining a temperature of the positive electrode slurry composition precursor, it was confirmed that $V_{72}$ was in a range of 0% to 50%, and it was confirmed that $V_{24}$ was in a range of -5% to 30%, $V_{168}$ was in a range of 0% to 80%, $V_{336}$ was in a range of 1% to 120%, and the viscosity of the mixture, $V_{24}$, $V_{72}$, $V_{168}$, and $V_{336}$ were 20,000 cP or less.

Particularly, with respect to the positive electrode slurry compositions prepared in Examples 6 and 17, that is, the positive electrode slurry compositions which were prepared by performing the step of cooling the mixture to -30°C to -23°C to prepare a positive electrode slurry composition precursor, it was confirmed that viscosity when the temperature of the positive electrode slurry composition precursor was maintained for 24 hours was 3,800 cP or less, viscosity when the temperature of the positive electrode slurry composition precursor was maintained for 72 hours was 3,950 cP or less, viscosity when the temperature of the positive electrode slurry composition precursor was maintained for 168 hours was 4,100 cP or less, viscosity when the temperature of the positive electrode slurry composition precursor was maintained for 336 hours was 4,050 cP or less, $V_{24}$ was 3.1% or less, $V_{72}$ was 7.7% or less, $V_{168}$ was 12.3% or less, and $V_{336}$ was 16.9% or less. This means that the viscosity of the positive electrode slurry composition was low and the viscosity increase rate was low even if time passed, in a case in which the step of cooling the mixture to -30°C to -23°C to prepare a positive electrode slurry composition precursor was included.

In contrast, with respect to the positive electrode slurry compositions prepared in Comparative Examples 1 to 4, that is, in a case in which a step of cooling the mixture was not included or a step of preparing a positive electrode slurry composition precursor without cooling the mixture to 15°C or less was included, it was confirmed that $V_{72}$ was greater than 50%, and $V_{24}$ was greater than 30%, $V_{168}$ was greater than 80%, $V_{336}$ was greater than 120%, and, since 30,000 cP, limiting viscosity of the viscometer, was reached after a certain period of time, it was confirmed that measurement was difficult to perform and it was not possible to prepare an electrode.

**Claims**

1. A method of preparing a positive electrode slurry composition, the method comprising steps of:

   (S1) mixing a positive electrode active material, a conductive agent, and a binder in a non-aqueous solvent to prepare a mixture having a solid content of greater than 60 wt%;
   (S2) cooling the mixture to -30°C to 15°C to prepare a positive electrode slurry composition precursor; and
   (S3) maintaining a temperature of the positive electrode slurry composition precursor to prepare a positive electrode slurry composition having a $V_{72}$ of 0% to 50%,
   wherein $V_n$ is a viscosity increase rate when the temperature of the positive electrode slurry composition precursor is maintained for n hours, and
   the viscosity increase rate is represented by Equation 1:

   $$\text{Viscosity increase rate } (V_n[\%]) = (VS2[cP] - VS1[cP] \times 100/VS1[cP]) \qquad \text{[Equation 1]}$$

   In Equation 1, VS1 is viscosity [cP] of the mixture, and VS2 is viscosity [cP] of the positive electrode slurry composition.

2. The method of claim 1, wherein the positive electrode active material comprises at least one selected from lithium composite transition metal compounds having compositions represented by Formulae 1 to 4:

   [Formula 1]  $Li_a[Ni_bCo_cMn_dM^1_{1-(h+c+d)}]O_2$

   wherein, in Formula 1,

   $M^1$ is at least one selected from the group consisting of sodium (Na), potassium (K), magnesium (Mg), aluminum (Al), iron (Fe), chromium (Cr), yttrium (Y), tin (Sn), titanium (Ti), boron (B), phosphorus (P), zirconium (Zr), ruthenium (Ru), niobium (Nb), tungsten (W), barium (Ba), strontium (Sr), lanthanum (La), gallium (Ga), gadolinium (Gd), samarium (Sm), calcium (Ca), cerium (Ce), fluorine (F), tantalum (Ta), molybdenum (Mo), scandium (Sc), vanadium (V), zinc (Zn), copper (Cu), indium (In), sulfur (S), and bismuth (Bi), and
   $0.9 \leq a \leq 1.1$, $0 < b < 1$, $0 < c < 1$, $0 < d < 1$, and $0 < b+c+d \leq 1$,

[Formula 2]       $Li_eNi_{1-f}M^2_fO_2$

wherein, in Formula 2,

$M^2$ is at least one selected from the group consisting of manganese (Mn), Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi, and
$0.9 \leq e \leq 1.1$ and $0 \leq f < 1$,

[Formula 3]       $Li_gNi_hMn_iM^3_jO_2$

wherein, in Formula 3,

$M^3$ is at least one selected from the group consisting of cobalt (Co), Na, K, Mg, Al, Fe, Cr, Y, Sn, Ti, P, Zr, Ru, Nb, W, Ba, Sr, La, Ga, Gd, Sm, Ca, Ce, F, Ta, Mo, Sc, V, Zn, Cu, In, S, B, and Bi, and
$1.0 \leq g \leq 1.5$, $0 \leq h \leq 0.5$, $0.4 \leq i \leq 0.9$, and $0 \leq j \leq 0.1$, and

[Formula 4]       $LiFe_{1-k}M^4_kPO_4$

wherein, in Formula 4,
$M^4$ is at least one selected from the group consisting of Mn, Co, Na, K, Mg, Al, Fe, Cr, Y, Sn, Ti, B, P, Zr, Ru, Nb, W, Ba, Sr, La, Ga, tellurium (Te), iridium (Ir), Gd, Sm, antimony (Sb), Ca, Ce, F, Ta, Mo, Sc, V, Zn, Cu, In, S, and Bi, and
$0 \leq k < 1$.

3.  The method of claim 1, wherein the positive electrode active material comprises at least two selected from lithium composite transition metal compounds having compositions represented by Formulae 1 to 4:

[Formula 1]       $Li_a[Ni_bCo_cMn_dM^1_{1-(b+c+d)}]O_2$

wherein, in Formula 1,

$M^1$ is at least one selected from the group consisting of Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi, and
$0.9 \leq a \leq 1.1$, $0 < b < 1$, $0 < c < 1$, $0 < d < 1$, and $0 < b+c+d \leq 1$,

[Formula 2]       $Li_eNi_{1-f}M^2_fO_2$

wherein, in Formula 2,

$M^2$ is at least one selected from the group consisting of Mn, Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi, and
$0.9 \leq e \leq 1.1$ and $0 \leq f < 1$,

[Formula 3]       $Li_gNi_hMn_iM^3_jO_2$

wherein, in Formula 3,

$M^3$ is at least one selected from the group consisting of Co, Na, K, Mg, Al, Fe, Cr, Y, Sn, Ti, P, Zr, Ru, Nb, W, Ba, Sr, La, Ga, Gd, Sm, Ca, Ce, F, Ta, Mo, Sc, V, Zn, Cu, In, S, B, and Bi, and
$1.0 \leq g \leq 1.5$, $0 \leq h \leq 0.5$, $0.4 \leq i \leq 0.9$, and $0 \leq j \leq 0.1$, and

[Formula 4]       $LiFe_{1-k}M^4_kPO_4$

wherein, in Formula 4,
$M^4$ is at least one selected from the group consisting of Mn, Co, Na, K, Mg, Al, Fe, Cr, Y, Sn, Ti, B, P, Zr, Ru, Nb, W, Ba, Sr, La, Ga, Te, Ir, Gd, Sm, Sb, Ca, Ce, F, Ta, Mo, Sc, V, Zn, Cu, In, S, and Bi, and

$$0 \leq k < 1.$$

4. The method of claim 1, wherein the positive electrode active material comprises a lithium composite transition metal compound having a composition represented by Formula 5:

[Formula 5] $\quad Li_a[Ni_{b'}Co_{c'}Mn_{d'}M^5_{1-(b'+c'+d')}]O_2$

$M^5$ is at least one selected from the group consisting of Na, K, Mg, Al, Fe, Cr, Y, Sn, Ti, B, P, Zr, Ru, Nb, W, Ba, Sr, La, Ga, Gd, Sm, Ca, Ce, F, Ta, Mo, Sc, V, Zn, Cu, In, S, and Bi, and
$0.9 \leq a' \leq 1.1$, $0.6 \leq b' < 1$, $0 < c' < 0.4$, $0 < d' < 0.4$, and $0 < b'+c'+d' \leq 1$.

5. The method of claim 1, wherein the mixing is performed such that an amount of the positive electrode active material is in a range of 85 parts by weight to 99 parts by weight, an amount of the conductive agent is in a range of 0.5 part by weight to 10 parts by weight, and an amount of the binder is in a range of 0.5 part by weight to 10 parts by weight, based on 100 parts by weight of the solid content.

6. The method of claim 1, wherein the solid content is in a range of 70 wt% to 85 wt%.

7. The method of claim 1, wherein $V_{24}$ is in a range of -5% to 30%.

8. The method of claim 1, wherein $V_{168}$ is in a range of 0% to 80%.

9. The method of claim 1, wherein $V_{336}$ is in a range of 1% to 120%.

10. The method of claim 1, wherein the mixture, the positive electrode slurry composition precursor, and the positive electrode slurry composition each independently have a viscosity of 20,000 cP or less.

11. The method of claim 1, wherein the mixing is performed at a temperature of 0°C to 15°C, and
the $V_{72}$ is in a range of 8% to 35%.

12. The method of claim 1, wherein the cooling is performed at a temperature of -30°C to less than 0°C, and
the $V_{72}$ is in a range of 0% to 20%.

13. A method of preparing a positive electrode, the method comprising steps of:

(A) preparing a positive electrode slurry composition according to the preparation method of any one of claims 1 to 12; and
(B) forming a positive electrode active material layer by applying the positive electrode slurry composition onto a current collector and drying the applied positive electrode slurry composition.

14. The method of claim 13, further comprising a step (A1) of transferring the positive electrode slurry composition to a means of applying the positive electrode active material composition, immediately before step (B),
wherein the transferring is performed at a temperature of -30°C to 15°C.

# INTERNATIONAL SEARCH REPORT

| International application No. |
| --- |
| **PCT/KR2024/007490** |

| A. | CLASSIFICATION OF SUBJECT MATTER |
| --- | --- |

**H01M 4/139**(2010.01)i; **H01M 4/525**(2010.01)i; **H01M 4/505**(2010.01)i; **H01M 4/58**(2010.01)i; **H01M 4/1391**(2010.01)i; **H01M 4/1397**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/139(2010.01); H01M 10/052(2010.01); H01M 10/0525(2010.01); H01M 4/04(2006.01); H01M 4/13(2010.01); H01M 4/1391(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 슬러리(cathode slurry), 냉각(cooling), 점도(viscosity), 고형분(solid content), 온도(temperature)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2018-0091092 A (GRST INTERNATIONAL LIMITED) 14 August 2018 (2018-08-14) See claims 1, 9, 13 and 15; and paragraphs [0086], [0087], [0093], [0095], [0097], [0099], [0107], [0108], [0113], [0135] and [0136]. | 1-14 |
| Y | KR 10-2020-0035582 A (LG CHEM, LTD.) 06 April 2020 (2020-04-06) See claim 1; paragraphs [0001], [0069], [0070], [0085]-[0086] and [0088]-[0090]; and figures 2-4. | 1-14 |
| A | KR 10-2022-0017652 A (SK ON CO., LTD.) 14 February 2022 (2022-02-14) See claims 1-6 and 9. | 1-14 |
| A | KR 10-2022-0054954 A (SK ON CO., LTD.) 03 May 2022 (2022-05-03) See claims 1-9. | 1-14 |
| A | JP 5126802 B2 (PANASONIC CORPORATION) 23 January 2013 (2013-01-23) See paragraphs [0044]-[0046] and [0081]. | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 September 2024** | **13 September 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/007490**

| Patent document cited in search report | | | Publication date (day/month/year) | Patent family member(s) | | | Publication date (day/month/year) |
|---|---|---|---|---|---|---|---|
| KR | 10-2018-0091092 | A | 14 August 2018 | CN | 107342392 | A | 10 November 2017 |
| | | | | CN | 107342392 | B | 09 March 2021 |
| | | | | CN | 107431193 | A | 01 December 2017 |
| | | | | CN | 107431193 | B | 04 May 2021 |
| | | | | CN | 108701815 | A | 23 October 2018 |
| | | | | CN | 108701815 | B | 17 September 2019 |
| | | | | EP | 3375028 | A1 | 19 September 2018 |
| | | | | EP | 3375028 | A4 | 06 February 2019 |
| | | | | EP | 3375028 | B1 | 08 April 2020 |
| | | | | EP | 3408883 | A1 | 05 December 2018 |
| | | | | EP | 3408883 | A4 | 11 September 2019 |
| | | | | EP | 3408883 | B1 | 08 May 2024 |
| | | | | EP | 3836253 | A1 | 16 June 2021 |
| | | | | JP | 2019-503052 | A | 31 January 2019 |
| | | | | JP | 2019-507464 | A | 14 March 2019 |
| | | | | JP | 6547071 | B2 | 17 July 2019 |
| | | | | JP | 6668486 | B2 | 18 March 2020 |
| | | | | KR | 10-1957872 | B1 | 13 March 2019 |
| | | | | KR | 10-2018-0102100 | A | 14 September 2018 |
| | | | | KR | 10-2020-0007104 | A | 21 January 2020 |
| | | | | KR | 10-2068243 | B1 | 20 January 2020 |
| | | | | KR | 10-2135603 | B1 | 20 July 2020 |
| | | | | US | 10361423 | B2 | 23 July 2019 |
| | | | | US | 2017-0207441 | A1 | 20 July 2017 |
| | | | | US | 2017-0207442 | A1 | 20 July 2017 |
| | | | | US | 2017-0207443 | A1 | 20 July 2017 |
| | | | | US | 2018-0323421 | A1 | 08 November 2018 |
| | | | | US | 9991504 | B2 | 05 June 2018 |
| | | | | WO | 2017-124859 | A1 | 27 July 2017 |
| | | | | WO | 2018-130122 | A1 | 19 July 2018 |
| KR | 10-2020-0035582 | A | 06 April 2020 | KR | 10-2555942 | B1 | 17 July 2023 |
| KR | 10-2022-0017652 | A | 14 February 2022 | CN | 114068876 | A | 18 February 2022 |
| | | | | EP | 3951921 | A1 | 09 February 2022 |
| | | | | JP | 2022-031222 | A | 18 February 2022 |
| | | | | US | 2022-0045308 | A1 | 10 February 2022 |
| KR | 10-2022-0054954 | A | 03 May 2022 | CN | 114497433 | A | 13 May 2022 |
| | | | | CN | 114497433 | B | 26 March 2024 |
| | | | | EP | 3989310 | A2 | 27 April 2022 |
| | | | | EP | 3989310 | A3 | 04 May 2022 |
| | | | | JP | 2022-070234 | A | 12 May 2022 |
| | | | | US | 2022-0131130 | A1 | 28 April 2022 |
| JP | 5126802 | B2 | 23 January 2013 | JP | 2006-024550 | A | 26 January 2006 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230070276

- JP 2007141649 A